# EUROPÄISCHE PATENTSCHRIFT

(11) **EP 3 532 681 B1**
(45) Veröffentlichungstag und Bekanntmachung des Hinweises auf die Patenterteilung: **11.11.2020**
(21) Anmeldenummer: 17794292.7
(22) Anmeldetag: 26.10.2017
(51) Int. Cl.: E04B 1/99, E04B 9/00, F24D 3/14, F24D 3/16, G10K 11/162, E04B 1/84, E04B 1/86, E04B 9/18, E04B 9/22, E04B 9/04

(54) **MULTIFUNKTIONALE DECKENKONSTRUKTION**
MULTIFUNCTIONAL CEILING CONSTRUCTION
STRUCTURE DE PLAFOND MULTIFONCTIONNELLE

(30) Priorität: 27.10.2016 DE 102016120554
(43) Veröffentlichungstag der Anmeldung: 04.09.2019
(73) Patentinhaber: Liaver GmbH & Co. KG, 98693 Ilmenau (DE)
(72) Erfinder: TSCHIERSCH, Ronald, 98714 Stützerbach (DE); HOPPE, Christian, 99092 Erfurt (DE); BÜHLER, Armin, 87733 Markt Rettenbach (DE)
(74) Vertreter: Engel, Christoph Klaus
(86) Internationale Anmeldenummer: PCT/EP2017/077444
(87) Internationale Veröffentlichungsnummer: WO 2018/078016

(56) Entgegenhaltungen:
- EP-A2- 2 006 608
- DE-U1- 20 022 685
- FR-A- 1 294 032
- GB-A- 630 311
- JP-U- S6 075 509
- Abc Akustik: "Akustik-Stuck "modern"", , 31. Dezember 2011 (2011-12-31), Seiten 1-2, XP055386658, Gefunden im Internet: URL:http://www.abc-akustik.de/files/produk tinformation_akustik-stuck_modern.pdf [gefunden am 2017-06-29]

## Beschreibung

Die vorliegende Erfindung betrifft eine multifunktionale Deckenkonstruktion, insbesondere für Wohn- und Arbeitsräume.

Aus dem Stand der Technik sind unterschiedlichste Deckenkonstruktionen bekannt, die im Regelfall speziell an den jeweiligen Einsatzzweck angepasst sind. Im Zuge einer optimierten und gleichzeitig variablen Raumnutzung, sowohl im privaten, vor allem aber im öffentlichen Bereich, werden an der Raumdecke mehr und mehr Funktionen realisiert, beispielsweise Heizung und Kühlung, Beleuchtung, Akustikgestaltung, Schallschutz, Brandschutz und/oder Medienversorgung. Entsprechende Einbauten werden sowohl in Neubauten aber auch im Rahmen der Modernisierung von Altbauten vorgenommen.

Gerade bei der Modernisierung werden in Altbauten sogenannte abgehängte Decken eingebaut, die im einfachsten Fall aus einer abgehängten Trägerkonstruktion und daran angebrachten Deckenplatten bestehen. Eine optisch ansprechende Gestaltung ist dabei relativ einfach und mit nur geringem Raumhöhenverlust zu erreichen.

Aus der DE 10 2010 036 439 A1 ist ein Flächenheiz- und -kühlsystem bekannt, welches für die Anwendung als Boden-, Wand- oder Deckenheizung/-kühlung nutzbar ist. Das System umfasst Flächenheiz-/kühlmodule, die eine wärmedämmende Unterschicht und eine gut Wärme leitende Oberschicht aufweisen, wobei die Oberschicht mit der Unterschicht unter Eingliederung einer ein Wärmeträgermedium leitenden Rohrleitung verbunden ist.

Aus der EP 2 960 585 A1 ist eine Wand- oder Deckenverkleidung mit einem Kühl- und/oder Heizungssystem, insbesondere nach dem Wärmestrahlungsprinzip bekannt. Die Wand- oder Deckenverkleidung ist mit wenigstens einem Halterungsprofil an der Wand oder Decke eines Bauwerkes befestigbar. Das Halterungsprofil besitzt auf einer zu dem zu kühlenden beziehungsweise zu heizenden Raum zugewandten Seite ein erstes Aufnahmemittel für ein Rohr. Eine Aufnahmeöffnung des Aufnahmemittels ist dem Raum zugewandt. Ein gerader Abschnitt des Rohrs ist mit dem Aufnahmemittel in dem Halterungsprofil fest zu einem integralen Bauteil verbunden.

Die DE 20 2005 000 336 U1 zeigt eine Akustikdecke, die als Anordnung von mindestens zwei auf Stoß verlegten Gipskartonlochplatten gestaltet ist. Zwischen scharfen Kanten der Gipskartonlochplatten erstreckt sich eine durch die Plattenkanten gebildeten Stoßfuge, die von einem Fugendeckstreifen überdeckt ist. Der Fugendeckstreifen ist aus einem Faservlies gebildet, wobei die Faser eine Chemie- und/oder Synthesefaser ist. Der Fugendeckstreifen ist mit der Oberfläche der Platten im Bereich der Stoßfuge verklebt.

Schallabsorbierende Elemente zur Verbesserung der Raumakustik, d. h. für eine bessere Sprachverständlichkeit und für den Gehörschutz, sind seit langem bekannt. Akustikdecken aus Gipsplatten oder Faserplatten verbessern die Raumakustik, reduzieren den Hall und wandeln Schallenergie in Wärme um. Für die Absorption hoher Schallfrequenzen ist der Einsatz gelochter Platten üblich, welche in bestimmten Abständen zur Wand oder auch an der Decke angebracht werden. Zwischen Platten und den dahinter liegenden Bauwerksflächen befinden sich schallschluckende und schalldämmende Stoffe, beispielsweise Schaumstoffe oder Filze.

Am Markt erhältlich sind Schallabsorberelemente aus einem gesinterten Blähglasgranulat, wie es beispielsweise von der Firma Liaver GmbH & Co. KG unter dem Markennamen Reapor geliefert wird.

Die meisten vorbekannten, effizient wirkenden Schallabsorberlösungen müssen entweder von Beginn an in die akustisch zu verbessernden Räume eingebaut oder mit erheblichem Aufwand nachgerüstet werden. Häufig kommt es dabei zu einem Zielkonflikt zwischen den akustischen Wirkungen und der sonstigen Gestaltung des Raumes unter funktionalen, bautechnischen und gestalterischen Gesichtspunkten. Beispielsweise lassen sich gute akustische Wirkungen durch eine vollflächige Belegung der Decke mit Schallabsorberplatten erreichen, jedoch ist dann eine Anordnung von Deckenklimaelementen nicht mehr möglich. Die Nachrüstung von Schall dämmenden Decken in bestehenden Räumen ist bautechnisch und finanziell aufwendig, sodass davon nur selten Gebrauch gemacht wird.

In der zum Anmeldezeitpunkt noch unveröffentlichten DE 10 2016 108 945.1 ist eine Schallabsorberanordnung beschrieben, bestehend aus mehreren Schallabsorberelementen, die in einem Raum mit Wänden und einer den Raum nach oben abschließenden Decke angeordnet sind. Mehrere aneinandergereihte Schallabsorberelemente bilden einen oder mehrere Absorberstreifen, der sich längs einer zwischen Wand und Decke des Raumes verlaufenden oberen Stoßkante zumindest abschnittsweise erstreckt.

Die DE 1 912 020 A beschreibt ein Bauelement für Strahlungs-Heiz-, Kühlungs- und/oder Konditionierungs-Einrichtungen. Das Bauelement umfasst eine Isolationsschicht, welche auf ihrer Unterseite Ausnehmungen zur Aufnahme von Rohren aufweist. Durch die Rohre kann ein Beeinflussungsmedium geleitet werden. Die Rohre werden von Wärmeverteilorgangen, vorzugsweise Wärmeleitlamellen, umfasst. Die Wärmeleitlamellen umgreifen mit ihren flachen, umgebogenen Enden die Isolationsschicht und liegen an einer Strahlungsschicht dicht an. Die Strahlungsschicht ist mit ihrer Unterfläche dem zu beeinflussenden Raum zugekehrt. Sie ist mit den Wärmeleitelementen und der Isolationsschicht fest verbunden. Die Strahlungsschicht kann zum Zwecke der Schalldämmung mit Löchern versehen sein.

In dem Fachartikel "PhoneSTOP-Schallabsorption innen und außen - auch zum Nachrüsten", 17.3.2006, (http://www.baulinks.de/webplugin/2006/0466.php4) ist eine Akustikplatte aus Blähglasgranulat beschrieben, die zur Schalldämmung nachträglich an Wand- und Deckenflächen aufgeklebt werden kann.

Die US 2014/0071662 A1 zeigt die Kombination von Beleuchtungseinrichtungen mit Elementen zur Verbesserung der Raumakustik. Die beschriebenen Lösungen werden beispielsweise bei Konferenzräumen eingesetzt.

Die 2- gattungsgemäße EP 2 006 608 A2 zeigt eine Wand- oder Deckenverkleidung mit einem Kühl- oder Heizungssystem, welche mit einem Halterungsprofil an Wand oder Decke eines Bauwerkes befestigt wird. Das Halterungsprofil weist auf der dem zu kühlenden bzw. zu heizenden Raum zugewandten Seite ein Aufnahmemittel für ein Rohrleitungsregister des Kühl- oder Heizungssystem auf, dessen Aufnahmeöffnung dem Raum zugewandt ist.

Die FR 1 294 032 A beschreibt eine Deckenkonstruktion mit Heizungsrohren und den Schall absorbierenden Platten.

Die zuvor genannten und zahlreiche weitere Lösungen ermöglichen die Realisierung regelmäßig einer spezifischen Funktion zusätzlich zur optischen Gestaltung der Decke. Keine der vorbekannten Lösungen gestattet jedoch die gleichzeitige Realisierung zahlreicher Funktionen in der Decke eines Raumes, jedenfalls unter Einhaltung einer geringen Bauhöhe, obgleich der Bedarf dafür seit geraumer Zeit besteht. Insbesondere wenn unter dem Blickwinkel des Brandschutzes erhöhte Anforderungen an die Feuerfestigkeit der Deckenkonstruktion gestellt werden, können Funktion wie Klimatisierung und akustische Verbesserung nur noch mit hohem Aufwand und einer mehrlagigen, hoch bauenden Konstruktion realisiert werden. Bei derartigen Anforderungen werden praktisch mehrere in sich geschlossene Deckenebenen aufgebaut, was nur bei großen Raumhöhen und hoch tragfähigen Bauwerksdecken möglich ist.

Die Aufgabe der vorliegenden Erfindung besteht somit darin, eine multifunktionale Deckenkonstruktion zur Verfügung zu stellen, die eine optische ansprechende Gestaltung, die Realisierung von Heiz- und/oder Kühlfunktionen und gleichzeitig die deutliche Verbesserung der Raumakustik in einem breiten Frequenzbereich ermöglicht. Verbesserte Absorptionsergebnisse sollen vor allem in Räumen mit einer Grundfläche > 40 m² erreicht werden. Die gesamte Deckenkonstruktion soll dabei ein minimales Volumen im Raum einnehmen und visuell kaum in Erscheinung treten. Bevorzugt soll die Deckenkonstruktion zusätzlich auch die heutigen Brandschutzanforderungen in öffentlichen Gebäuden erfüllen.

Zur Lösung der Aufgabe dient eine multifunktionale Deckenkonstruktion gemäß dem beigefügten Anspruch 1.

Die erfindungsgemäße multifunktionale Deckenkonstruktion eignet sich insbesondere für den Einsatz in Wohn- und Arbeitsräumen, vor allem aber für öffentliche Gebäude mit erhöhten Anforderungen an die Raumakustik, die Energieeffizienz und den Brandschutz. Speziell eignet sich die Deckenkonstruktion auch bei der Modernisierung / Sanierung älterer Gebäude, da sie nur geringe Flächengewichte und eine geringe Bauhöhe aufweist.

Die Deckenkonstruktion umfasst mehrere Wärmeleitprofile, die einer Bauwerksdecke angebracht sind, beispielsweise unmittelbar angeschraubt, vermittels von Abhängern und/oder Tragprofilen oder auf sonstige geeignete Weise befestigt. Die Wärmeleitprofile besitzen eine nach unten gerichtete Montagefläche, wobei in der Montagefläche ein Leitungsaufnahmebereich ausgeformt ist. Eine Wärmemediumleitung, die aus mehreren Leitungsabschnitten zusammengesetzt sein kann, verläuft im Leitungsaufnahmebereich der Wärmeleitprofile und führt ein Wärme transportierendes Medium, welches für Heiz- und Kühlzwecke an eine entsprechende Anlage angeschlossen wird.

Die Deckenkonstruktion umfasst weiterhin mindestens eine Deckenplatte, die an der Montagefläche der Wärmeleitprofile befestigt ist und in Wärme leitendem Kontakt mit der Wärmemediumleitung steht. Die Deckenplatte besteht im Regelfall aus zahlreichen Plattenelementen, die an ihrer zum Raum gerichteten Unterseite dekorativ gestaltet werden können, um die sichtbare Fläche der Deckenkonstruktion zu bilden.

Schließlich besitzt die Deckenkonstruktion mindestens einen aus mehreren Schallabsorberelementen zusammengesetzten Absorberstreifen, der sich längs einer zwischen einer Bauwerkswand und der Ebene der Deckenplatte verlaufenden oberen Stoßkante zumindest abschnittsweise erstreckt. Die Schallabsorberelemente haben eine Breite von 200 - 400 mm, eine Dicke von 40 - 65 mm sowie einen längenspezifischen Strömungswiderstand im Bereich 8 - 10 kPa*s/m². Mit diesen Abmessungen des Absorberstreifens - unter der Bedingung seiner Anbringung angrenzend an die obere Stoßkante zwischen Wand und Decke - ergeben sich mit vergleichsweise kleiner Absorberfläche überraschend starke Effekte der Schallabsorption.

Ein Vorteil der multifunktionalen Deckenkonstruktion ist darin zu sehen, dass in einer Deckenkonstruktion mit geringer Bauhöhe sowohl die Funktion der Klimatisierung als auch die Verbesserung der Raumakustik integriert sind. Besonders effizient in Bezug auf di9e schallabsorbierende Wirkung ist die erfindungsgemäße Deckenkonstruktion in Räumen mit einer Grundfläche > 40 und < 150 m².

Gemäß einer bevorzugten Ausführungsform ist die Deckenplatte mit einer geschlossenen, zum Raum gerichteten Unterseite gestaltet. Die bei akustischen Anwendungen regelmäßig erforderlichen Lochplatten mit geöffneter Unterseite sind hier nicht nötig, da die akustischen Eigenschaften im gewünschten Maß durch den Absorberstreifen erreicht werden.

In einer besonders bevorzugten Ausführung besteht die Deckenplatte aus einem nicht brennbaren, feuerhemmenden Material. Die Deckenplatte ist insbesondere als Brandschutzplatte ausgebildet, welche den Anforderungen in bestimmten Feuerwiderstandsklassen entspricht. Vorzugsweise werden Brandschutzplatten der Feuerwiderstandsklasse F30, F60 oder F90 verwendet. Außerdem besteht auch der Absorberstreifen bevorzugt aus einem feuerhemmenden Material, sodass er nicht nur die Akustik verbessert sondern auch Brandschutzfunktionen erfüllt. Die Deckenkonstruktion gestattet ohne sonstige Anpassungen damit die Realisierung hoher Brandschutzwerte. Dies ist möglich, da die gesamte Deckenfläche geschlossen aufgebaut werden kann, sodass hohe Brandschutzanforderungen erfüllt werden.

Bei einer zweckmäßigen Ausführungsform verläuft eine Außenseite der Wärmemediumleitung in einer Ebene mit der Montagefläche der Tragprofile, um auf diese Weise einen guten Wärmeübergang zwischen der Wärmemediumleitung und der Deckenplatte zu erreichen. Bei abgewandelten Ausführungsformen wird dies durch zusätzliche Elemente, wie Wärmeleitbleche oder ähnliches erreicht.

Bei einer abgewandelten Ausführungsform kann eine metallische Wärmeleitplatte oder eine metallische Folie, zwischen der Oberseite der Deckenplatte und den Montageflächen der Wärmeleitprofile verlaufen. Die Wärmeleitplatte verbessert den Wärmeübergang von der Wärmemediumleitung zur Deckenplatte und erhöht damit die Effizienz beim Heizen/Kühlen des Raums.

Eine zweckmäßige Ausführung der multifunktionalen Deckenkonstruktion zeichnet sich dadurch aus, dass sich die Deckenplatte im Wesentlichen bis zur Bauwerkswand erstreckt. Der Absorberstreifen ist in diesem Fall an der in den Raum gerichteten Unterseite der Deckenplatte angebracht. Für die Gewährleistung von Brandschutzanforderungen kommt es in dieser Ausführung nicht auf die Eigenschaften der Schallabsorberelemente an, da die brandhemmende Deckenplatte durchgehend gestaltet ist.

In einer abgewandelten Ausführung erstreckt sich zwischen der Deckenplatte und der Bauwerkswand ein streifenförmiger Freiraum, in welchem der Absorberstreifen verläuft. Bevorzugt liegen die in den Raum gerichtete Unterseite der Deckenplatte und die in den Raum gerichtete Unterseite des Absorberstreifens in einer Ebene. In diesem Fall ist es für die Erzielung hoher Brandschutzeigenschaften erforderlich, dass die Schallabsorberelemente ebenfalls aus brandhemmendem Material bestehen, insbesondere aus Schaumglas, wie es weiter unten detailliert beschrieben ist.

Bei einer nochmals abgewandelten Ausführung ist die Deckenplatte zwei- oder mehrlagig ausgeführt, wobei vorzugsweise die oberste Lage sich im Wesentlichen bis zur Bauwerkswand erstreckt und die nach unten gerichtete Lage den streifenförmigen Freiraum belässt, in welchem der Absorberstreifen verläuft. Ebenso ist es möglich, eine Lage der Deckenplatte aus Lehm, Gips oder ähnlichem Material zu fertigen, um eine selbstständig wirkende Brandschutzebene zu erzeugen und dennoch eine hohe Leistungsdichte im Kühlbetrieb aufrecht zu erhalten.

Eine weitergebildete Ausführungsform der multifunktionalen Deckenkonstruktion besitzt Abhänger, die einen Schwingungsdämpfungsabschnitt aufweisen. Dies führt dazu, dass die Deckenkonstruktion besonders gut Schall dämmende Eigenschaften besitzt, da der Trittschall aus einem oberhalb der Deckenkonstruktion befindlichen Stockwerk von den Deckenplatten entkoppelt wird.

Ein in einem anderen Aspekt weitergebildete Ausführungsform der Deckenkonstruktion zeichnet sich dadurch aus, dass zwischen der Deckenplatte und der Montagefläche der Wärmeleitprofile zumindest abschnittsweise eine metallische Wärmeleitplatte angeordnet ist. Die Effizienz der Heizungs- und Kühlfunktion lässt sich damit steigern.

Eine bevorzugte Ausführung verwendet zwischen dem Rand der Deckenplatte und/oder dem Rand des Absorberstreifens eine elastische Brandschutzdichtung. Auf diese Weise lassen sich hohe Brandschutzanforderungen erfüllen, da auch im notwendigen Fugenbereich entsprechende Vorkehrungen gegen ein frühzeitiges Durchschlagen von Hitze bzw. Flammen getroffen sind.

Besonders bevorzugt erfüllt die Deckenplatte einen z.B. durch Normen oder vergleichbare Vorschriften vorgegebenen Feuerwiderstand. Dies kann man mit Platten auf Gips-, Lehm- und Zementbasis oder aus Verbundwerkstoffen (z. B. Blähglas / Gips, Zement / Blähglas, Lehm / Blähglas) erreicht werden.

Es ist besonders vorteilhaft, wenn der Absorberstreifen lösbar in der Deckenkonstruktion angebracht ist. Der Absorberstreifen kann dann beispielsweise für Wartungsarbeiten entnommen und nachfolgend wieder eingesetzt werden. Für die Befestigung des Absorberstreifens eignet sich insbesondere eine Magnetverbindung, wozu im Absorberstreifen Magnete eingelassen sind, die mit den metallischen Flächen der Tragprofile zusammenwirken.

Gemäß einer abgewandelten Ausführungsform können in die Deckenplatte oder in den Freiraum, in welchem der Absorberstreifen angebracht ist, zusätzlich Raumbeleuchtungsmittel integriert sein.

Eine nochmals abgewandelte Ausführungsform zeichnet sich dadurch aus, dass ein aus feuerhemmendem Material bestehender Absorberstreifen im wesentlichen vertikal an der Bauwerkswand angebracht ist, wobei sich der Absorberstreifen auch in diesem Fall bis an die Stoßkante zwischen Bauwerkswand und der Ebene, in der die Deckenplatte liegt erstreckt. Der Absorberstreifen stößt somit von unten an die Deckenplatte an. Dies bietet neben den beschriebenen akustischen Vorteile auch in Bezug auf die Brandschutzanforderungen Vorzüge, denn eine ggf. konstruktionsbedingte Fuge zwischen Wand und Decke wird durch den Absorberstreifen geschlossen, sodass ein Flammendurchbruch in diesem kritischen Bereich vermieden wird.

Eine bevorzugte Ausführungsform verwendet eine Deckenplatte aus einem feuchteabsorbierenden Werkstoff, der insbesondere aus einer Materialmischung aus Holz, Lehm, Gips und/oder Gips-Faser besteht. Die feuchteabsorbierende Deckenplatte bildet bevorzugt selbst eine dampfdichte Ebene. Dies kann durch eine zusätzliche oder bereits auf die Deckenplatte applizierte Dampfsperre erfolgen. Diese Konstruktion bietet bei der Anwendung zur Kühlung des Raums die Möglichkeit, die Temperatur des Wärme transportierenden Mediums (i.d.R. Wasser) in der Wärmemediumleitung unter der Taupunkttemperatur der Raumluft einzustellen, ohne dass an der Wärmemediumleitung, den Wärmeleitprofilen oder im Hohlraum oberhalb der Deckenplatte Feuchte ausfällt. Stattdessen fällt Feuchte an der Unterseite der Deckenplatte auf der dem Raum zugewandten Seite aus. In einem Zusammenspiel aus Adsorption und Absorption nimmt die Deckenplatte die ausgefallene Feuchte auf. Dies hat mehrere positive Effekte: Die Raumluftfeuchte verringert sich. Damit sinkt die Neigung zur Schimmelbildung und gleichzeitig erhöht sich für im Raum befindliche Personen die Behaglichkeit durch Verbesserung des Kälteempfindens. Die Wärmeleitfähigkeit der Deckenplatte steigt deutlich an, sodass auch die Kühlleistung steigt. Die Brandschutzeigenschaften verbessern sich, da der Wassergehalt in der Deckenplatte steigt. Der Schallschutz wird verbessert, da das Gewicht der Deckenplatte aufgrund des erhöhten Wassergehalts ansteigt. Es kommt zu einer zusätzlichen adiabate Kühlung, durch die Verdunstung der ausgefallenen Feuchte.

Die multifunktionale Deckenkonstruktion gestattet aufgrund ihrer neuen Eigenschaften auch veränderte Betriebsweisen im Heizungs- bzw. Kühlbetrieb. So ist ein gezielter Betrieb unter dem Taupunkt möglich, zur Herbeiführung einer Trocknung der Raumluft und zur Steigerung der Wärmeleitfähigkeit der Deckenplatte und damit einhergehender Erhöhung der aktiven und/oder adiabaten Kühlleistung. Ebenso kann diese Betriebsweise die Betriebssicherheit steigern, insbesondere bei Wetterumschwung. Gleichzeitig vereinfacht sich die Steuerung der Kühlanlage, da auf die sonst üblichen Taupunktfühler verzichtet werden kann.

In der multifunktionalen Deckenkonstruktion bilden vorzugsweise mehrere aneinandergereihte Schallabsorberelemente einen oder mehrere Absorberstreifen, der/die sich längs einer bzw. sämtlicher zwischen Wand und Decke des Raumes verlaufenden oberen Stoßkanten erstrecken. Der Absorberstreifen besitzt eine Breite von 200 - 400 mm, bevorzugt 250 - 350 mm, besonders bevorzugt 310 mm. Die Dicke des Absorberstreifens beträgt 40 - 65 mm, bevorzugt 50 mm. Besonders bedeutsam für die akustische Funktionsfähigkeit der Deckenkonstruktion ist es, dass die Schallabsorberelemente einen längenspezifischen Strömungswiderstand im Bereich 8 - 10 kPa*s/m², bevorzugt 8 - 9 kPa*s/m² aufweisen. Es hat sich überraschender Weise gezeigt, dass Strömungswiderstände außerhalb des genanten Bereichs nicht zu den gewünschten Absorptionen führen, und auch dann nicht, wenn die Strömungswiderstände in den Schallabsorberelementen stark variieren und damit jedenfalls teilweise außerhalb des von der Erfindung aufgefundenen Bereiches liegen.

Bevorzugt variiert der längenspezifische Strömungswiderstand der genutzten Schallabsorberelemente um weniger als 0,5 kPa*s/m², vorzugsweise weniger als 0,3 kPa*s/m², bezogen auf die Fläche eines solchen Elements. Besonders bevorzugt gilt diese geringe Streuung des längenspezifischen Strömungswiderstands über den gesamten Absorberstreifen betrachtet, wobei jeweils der längenspezifische Strömungswiderstand auf einer Fläche des Absorberstreifens < 0,5 m², vorzugsweise < 0,3 m², besonders bevorzugt < 0,1 m² betrachtet wird.

Der mit einer erfindungsgemäßen Deckenkonstruktion ausgerüstet Raum dient Personen zum Wohn-, Arbeits- oder sonstigen Aufenthaltszwecken. Er weist mindestens einen an einer oberen Kante des Raumes angeordneten Absorberstreifen auf. Wesentlich für die akustische Wirkung ist, dass die Schallabsorberelemente als Absorberstreifen ausgebildet sind und sich längs der oberen Kante des Raumes zumindest abschnittsweise erstrecken.

Ein wesentlicher Vorteil des derart ausgerüsteten Raumes besteht darin, dass durch Anordnung des Absorberstreifens an der oberen Kante (Stoßkante) des Raumes eine besonders hohe Absorption von Schall erreicht werden kann. Diese hohe Absorptionswirkung wird durch die in diesem Bereich sowohl an der Wand als auch an der Decke auftretenden Reflexionen der Schallwellen erreicht. Der als Absorberstreifen ausgeführte Schallabsorberelement lässt sich aufwandsarm in die Deckenkonstruktion integrieren und erfordert nur wenig Einbauraum. Durch Anordnung des Absorberstreifens an der oberen Kante des Raumes werden die zur sonstigen Nutzung im Raum verfügbaren Flächen und Volumen nur minimal eingeschränkt.

Durch die Verwendung von Schallabsorberelementen mit einem längenspezifischen Strömungswiderstand im Bereich 8 - 10 kPa*s/m², bevorzugt 8 - 9 kPa*s/m² wird es möglich, eine sehr effiziente Schallabsorption mit nur geringen Volumina des schallabsorbierenden Materials und des vom Absorberstreifen eingenommenen Raums in einem breiten Frequenzbereich zu erzielen. Insbesondere können relativ dünne Schallabsorberelemente direkt im Randbereich der akustisch stark reflektierenden Decke angebracht werden, ohne Belassung eines nennenswerten Luftraums dazwischen. Die hinter dem Absorberstreifen liegende Deckenplatte (gemäß der o.g. Ausführung) reflektiert die Schallwellen, die den Absorberstreifen bereits einmal durchlaufen haben, diffus in diesen zurück, wo dann weitere Absorption stattfinden kann. Für diese besonders effiziente Absorption ist es erforderlich, dass der längenspezifische Strömungswiderstand in dem genannten Bereich eingestellt wird, z. B. durch geeignete Auswahl der Korngröße und der Materialzusammensetzung der verwendeten Schallabsorberelemente. Die Schallabsorberelemente bestehen aus Blähglasgranulat mit einer Korngröße von 0,25 - 4 mm, wobei das Granulat in Plattenform gesintert ist oder mit hinzugesetztem Bindemittel verbunden ist.

Die in der Erfindung genutzten akustischen Wirkungen basieren damit auf einer Kombination aus der genannten Beschaffenheit der Schallabsorberelemente und deren genannter Anordnung in der Deckenkonstruktion.

Nach einer besonders bevorzugten Ausführungsform erstreckt sich der Absorberstreifen umlaufend an den oberen Kanten des Raumes, jeweils als Bestandteil der Deckenkonstruktion. Durch Nutzung eines umlaufenden Absorberstreifens wird eine sehr gute Schallabsorption erreicht. Falls beispielsweise aus baulichen Gründen, kein umlaufender Verlauf des Absorberstreifens möglich ist, kann der Absorberstreifen auch bereichsweise unterbrochen sein, wobei auch in diesem Fall eine gute Schallabsorption erreicht werden kann.

Eine vorteilhafte Ausführungsform verwendet mehrere Absorberstreifen. Jeder Absorberstreifen erstreckt sich wiederum an einer oberen Kante des Raumes zumindest abschnittsweise, jeweils als Bestandteil der Deckenkonstruktion. Die Absorberstreifen können beispielsweise in Form gut handhabbarer schmaler Platten ausgebildet sein, welche vorzugsweise fortlaufend aneinander anschließen. Zwischen einzelnen Absorberstreifen können jedoch auch, sofern dies erforderlich ist, Zwischenräume bestehen.

Der Absorberstreifen ist vorzugweise an der Deckenplatte befestigt oder er verläuft neben dieser im Freiraum zwischen Deckenplatte und Bauwerkswand. Er erstreckt sich jeweils bis zur oberen Stoßkante des Raums, d. h. bis in die Ecke, die zwischen der Wand und der Decke ausgebildet ist. Bei Bedarf kann in der Stoßkante eine mit elastischem Dichtmaterial gefüllte Fuge ausgebildet werden. Die Befestigung kann beispielsweise mittels eines geeigneten Klebers an der Deckenplatte erfolgen. Alternativ kann der Absorberstreifen auch mit Hilfe von Klammern oder anderer geeigneter mechanischer Befestigungsmittel an der Deckenplatte oder an den Tragprofilen fixiert werden. Denkbar ist auch die Verwendung eines speziellen Trägerprofils, in welches der Absorberstreifen eingeklemmt oder auf andere Weise befestigt ist. Insbesondere kommt auch eine lösbare Befestigung in Betracht, wobei der Absorberstreifen eine darunter liegende Revisionsöffnung in der Deckenkonstruktion abdeckt.

Gemäß einer vorteilhaften Ausführungsform besteht der Absorberstreifen aus einem akustisch wirksamen, schallabsorbierenden, nicht duktilen Schaumstoff. Hierbei handelt es sich vorzugsweise um einen mineralischen Werkstoff, der einen Hartschaumstoff bildet. Als besonders geeignetes Material für die den Absorberstreifen bildenden Schallabsorberelemente hat sich glasbasierter, akustisch wirksamer und diffusionsoffener Schaumstoff erwiesen, welcher bevorzugt ein Blähglasgranulat beinhaltet. Einzelne Glasteilchen sind hierfür durch Sintern oder ein Bindemittel, welches einen Faseranteil aufweisen kann, miteinander verbunden. Das für den Absorberstreifen verwendete Material ist zweckmäßigerweise Feuchtraum geeignet, frostsicher, schwer entflammbar und sehr leicht und somit in unterschiedlichsten Räumlichkeiten einsetzbar. Es lässt sich außerdem problemlos zuschneiden.

Der erfindungsgemäß erforderliche längenspezifische Strömungswiderstand des Schallabsorberelementes lässt sich besonders einfach einstellen durch die verwendeten Körnungen, also die Korngrößenverteilung im bevorzugt plattenförmig ausgebildeten Schallabsorberelement und/oder den Anteil an Bindemittel, welches während der Herstellung dem Blähgasgranulat zugesetzt wird.

Der Absorberstreifen weist eine Breite von 200 mm bis 400 mm auf. Weiterhin hat sich eine Dicke von 25 mm bis 60 mm als zweckmäßig erwiesen. Ein derart ausgebildeter Absorberstreifen lässt sich gut in die Deckenkonstruktion integrieren und benötigt vergleichsweise wenig Bauraum.

Eine besonders gute und unauffällige Integration des Absorberstreifens kann durch Einlassen in die Decke erreicht werden. Hierfür wird vorzugsweise eine entsprechende Ausnehmung in die Deckenplatte eingebracht bzw. ein Freiraum zwischen Deckenplatte und Bauwerkswand belassen. Der Absorberstreifen schließt bevorzugt bündig mit der Unterseite der Deckenplatte ab. Diese Einbauvariante eignet sich insbesondere bei Neubauten, wenn die Ausnehmungen bereits in der Planungsphase berücksichtigt werden, bzw. bei anstehenden, grundlegenden Renovierungsarbeiten. Die Freiräume bzw. Ausnehmungen können in der Trockenbaukonstruktionen der Deckenkonstruktion vorgesehen und dann mit Schallabsorberelementen bestückt werden. Für den auf diese Weise schallgedämmten Raum hat sich eine Größe zwischen 80 m² und 130 m² Grundfläche bei einer Wandhöhe von 2 bis 3 m als vorteilhaft erwiesen. In diesem Bereich lassen sich mit dem verwendeten schallabsorbierenden Absorberstreifen besonders gute Resultate hinsichtlich der Schallabsorption erreichen.

Um bei Räumen mit einer deutlich über 120 m² liegenden Grundfläche beste akustische Absorptionswirkungen zu erzielen, ist eine akustische Aufteilung des Raumes in mehrere Zellen erforderlich. Dies lässt sich durch die Anbringung weiterer Schallabsorberelemente erreichen, die bevorzugt dieselben Eigenschaften wie die in der zuvor beschriebenen Deckenkonstruktion genutzten Schallabsorberelemente haben. Die weiteren Schallabsorberelemente werden an der Deckenplatte befestigt oder in diese eingelassen und zergliedern den Raum dadurch in die genannten Zellen.

Mit der in die erfindungsgemäße Deckenkonstruktion integrierten Schallabsorberanordnung sind in eingerichteten Räumen Nachhallzeiten im Bereich von 0,6 s bis 0,9 s erreichbar, was dem angestrebten Wert in Kommunikationsräumen entspricht. In nicht eingerichteten Räumen mit Wänden aus Stahlbeton wird die Nachhallzeit von 2-4 s durch die Nutzung der Schallabsorberelemente auf 0,8 bis 1,2 s reduziert. Die Schallabsorberanordnung eignet sich insbesondere für die Dämpfung im Frequenzbereich von 250 Hz bis 4 kHz.

Bei einer abgewandelten Ausführungsform werden Absorberstreifen sowohl an der Wand als auch an der Deckenkonstruktion angebracht, die sich jeweils bis zur oberen Stoßkante des Raums erstrecken, d. h. im Eckbereich zwischen Wand und Decke aneinanderstoßen. Es können alternativ dazu auch Eckprofile aus Absorberstreifen genutzt werden, die direkt im Eckbereich des Raumes angebracht werden.

Vorteilhaft ist eine Ausführungsform, bei welcher die zum Raum gerichtete Oberfläche des Absorbersteifens eine strukturierte Oberfläche besitzt. Die Strukturierung kann die Absorptionseigenschaften weiter verbessern und gleichzeitig einer ästhetischen Gestaltung dienen, sodass der Absorberstreifen beispielsweise in der Art einer Borte bzw. eines Fries erscheint.

Weitere Einzelheiten und Vorteile der erfindungsgemäßen Deckenkonstruktion und des damit ausgerüsteten schallgedämmten Raumes ergeben sich aus der nachfolgenden Beschreibung bevorzugter Ausführungsformen unter Bezugnahme auf die Zeichnung. Es zeigen:
- Fig. 1:: eine vereinfachte Schnittansicht einer ersten Ausführungsform einer erfindungsgemäßen multifunktionalen Deckenkonstruktion mit einem auf eine Deckenplatte aufgesetzten Absorberstreifen;
- Fig. 2:: eine vereinfachte Schnittansicht einer zweiten Ausführungsform der multifunktionalen Deckenkonstruktion mit einem in eine Deckenplatte integrierten Absorberstreifen;
- Fig. 3:: einen nicht maßstabsgetreue Deckenuntersicht eines mit der multifunktionalen Deckenkonstruktion ausgerüsteten, schallgedämmten Raumes;
- Fig. 4:: den an der Deckenplatte angeordneten Absorberstreifen im Raum;
- Fig. 5:: eine vereinfachte Schnittansicht einer abgewandelten Ausführungsform der multifunktionalen Deckenkonstruktion mit in die Deckenplatte integrierten Absorberstreifen aber unter Verzicht auf Trägerprofile;
- Fig. 6:: eine vereinfachte Schnittansicht einer nochmals abgewandelten Ausführungsform der multifunktionalen Deckenkonstruktion mit auf die Deckenplatte aufgesetzten Absorberstreifen aber unter Verzicht auf Trägerprofile;
- Fig. 7:: eine vereinfachte Schnittansicht weiterer Ausführungsformen der multifunktionalen Deckenkonstruktion;
- Fig. 8:: eine vereinfachte Schnittansicht einer abgewandelten Ausführungsform der multifunktionalen Deckenkonstruktion mit auf die Bauwerkswand aufgesetzten Absorberstreifen;
- Fig. 9:: eine vereinfachte Schnittansicht einer abgewandelten Ausführungsform der multifunktionalen Deckenkonstruktion mit in die Bauwerkswand integrierten Absorberstreifen;
- Fig. 10:: ein Diagramm zur Darstellung von Messwerten der Nachhallzeit in unterschiedlich konfigurierten Räumen über einen breiten Frequenzbereich.

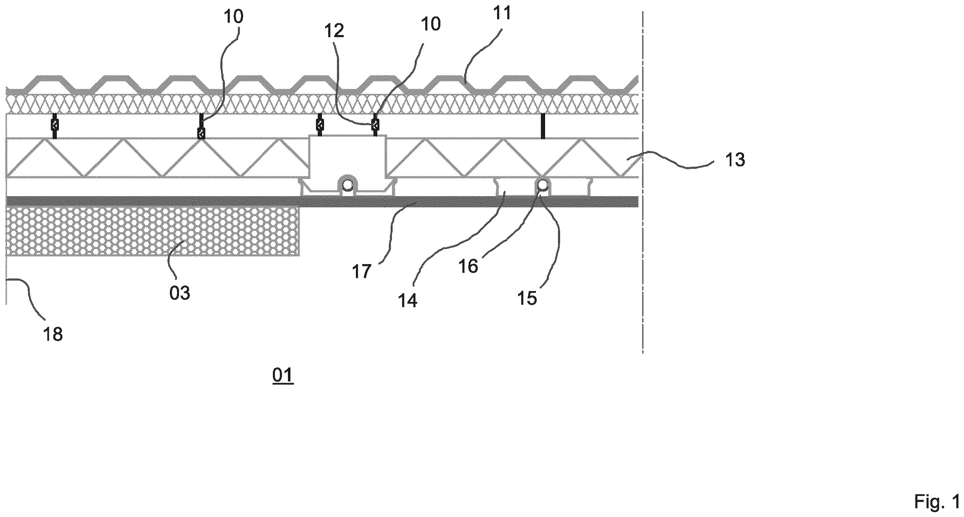

Fig. 1 zeigt eine vereinfachte Schnittansicht einer ersten Ausführungsform einer erfindungsgemäßen multifunktionalen Deckenkonstruktion. Die Deckenkonstruktion umfasst hier zahlreiche Abhänger 10, die an einer Bauwerksdecke 11 angebracht sind und sich nach unten in einen Raum 01 erstrecken. Bevorzugte weisen die Abhänger 10 einen Schwingungsdämpfungsabschnitt 12 auf, über welchen eine Schallentkopplung und Dämpfung erfolgt, insbesondere von Trittschall von oberhalb der Bauwerksdecke 11 liegenden Stockwerken. Die Deckenkonstruktion besitzt in diesem Fall weiterhin Tragprofile 13, die an den Abhängern 10 montiert sind. An den Tragprofilen 13 sind mehrere Wärmeleitprofile 14 angebracht, die eine nach unten weisende Montagefläche aufweisen. In der Montagefläche der Wärmeleitprofile 14 ist eine Leitungsaufnahmebereich 15 vorgesehen, der sich entlang der Längsachse des Tragprofils erstreckt. Im Leitungsaufnahmebereich 15 sind Abschnitte einer Wärmemediumleitung 16 verlegt, vorzugsweise mit optimiertem Wärmeleitkontakt zum Klimaprofil, sodass ein guter Wärmetransport zu bzw. von den Montageflächen erfolgen kann.

An den Montageflächen der Wärmeleitprofile 14 ist eine Deckenplatte 17 angebracht, deren Unterseite zum Raum 01 gerichtet ist. Die Deckenplatte steht unmittelbar oder mittelbar in gutem Wärmeleitkontakt mit der Wärmemediumleitung 16, sodass je nach Temperatur des die Leitung 16 durchströmenden Wärmeträgers eine Heizung oder Kühlung des Raums 01 erfolgt.

Schließlich besitzt die Deckenkonstruktion einen Absorberstreifen 03, der bei der in Fig. 1 dargestellten Ausführungsform an der Unterseite der Deckenplatte 17 aufgesetzt ist und zwar derart, dass sich der Absorberstreifen bis in die Stoßkante zwischen der Deckenplatte und einer angrenzenden Bauwerkswand 18 erstreckt. Zur Abdichtung zwischen der Deckenplatte 17 und der Bauwerkswand 18 kann darüber hinaus eine flexible Brandschutzdichtung (nicht gezeigt) in der entsprechenden Fuge angebracht sein.

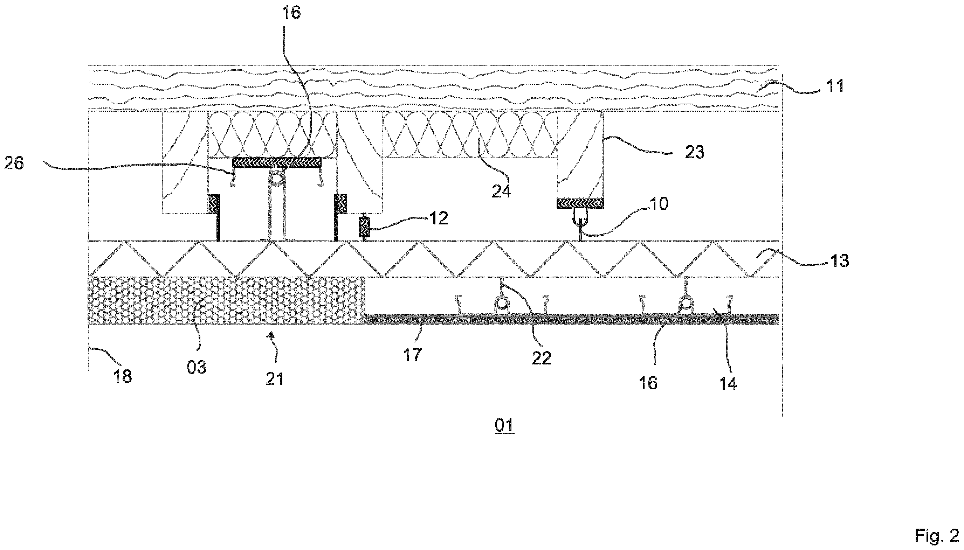

Fig. 2 zeigt eine vereinfachte Schnittansicht einer zweiten Ausführungsform der multifunktionalen Deckenkonstruktion. Der wesentliche Unterschied zu der zuvor beschriebenen Ausführung besteht darin, dass der Absorberstreifen 03 nicht auf der Unterseite der Deckenplatte 17 aufgesetzt ist, sondern stattdessen in einem streifenförmigen Freiraum 21 verläuft, der zwischen der Deckenplatte 17 und der Bauwerkswand 18 belassen wird. Der Absorberstreifen ist in diesem Fall beispielsweise am Tragprofil 13 befestigt. Bevorzugt ist der Absorberstreifen in seiner Breite so dimensioniert, dass er den Freiraum zwischen Deckenplatte 17 und Bauwerkswand 18 vollständig ausfüllt, wobei in der Fuge wiederum eine Brandschutzdichtung angeordnet sein kann (nicht gezeigt). In seiner Dicke ist der Absorberstreifen 03 bevorzugt so dimensioniert, dass er an seiner Unterseite in einer Ebene mit der Unterseite der Deckenplatte liegt, sodass eine einheitlicher optischer Eindruck der Deckenfläche entsteht.

Eine weitere Besonderheit der in Fig. 2 gezeigten Ausführungsform besteht in der Verbindung zwischen dem Tragprofil 13 und den Wärmeleitprofilen 14, die hier durch Zwischenabhänger 22 realisiert ist. Die Abhänger 10 können je nach Konstruktion der Bauwerksdecke beispielsweise an Deckenbalken 23 angebracht sein. Schließlich ist in Fig. 2 noch verdeutlicht, das in einem Hohlraum zwischen dem Trägerprofil und der Bauwerksdecke 11 eine Wärmedämmung 24 angeordnet werden kann, um den Wärmeverlust nach oben zu beschränken. In besonderen Anwendungsfällen können in diesem Hohlraum außerdem obere Wärmeleitprofile 26 angeordnet sein, in denen bei Bedarf weitere Wärmemediumleitungen 16 verlegt werden können.

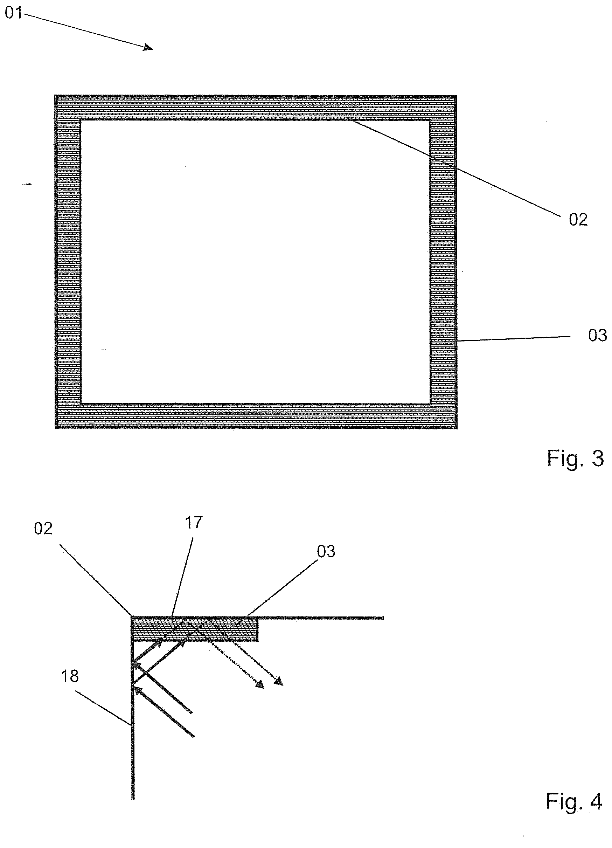

Fig. 3 zeigt eine nicht maßstabsgetreue Deckenunteransicht des mit der Deckenkonstruktion gemäß Fig. 1 oder 2 ausgerüsteten Raumes 01. Die Grundfläche des Raumes beträgt vorzugsweise 40 - 130 m². An den oberen Stoßkanten 02 des Raumes 01 ist umlaufend der sich längs der Stoßkanten 02 erstreckende schallabsorbierende Absorberstreifen 03 angeordnet. Der Absorberstreifen 03 befindet sich an der Deckenplatte 17 und erstreckt sich jeweils bis in die zwischen Bauwerkswand 18 und Deckenplatte 17 ausgebildete Ecke (Stoßkante). Zwischen Deckenplatte und Absorberstreifen 03 bzw. Deckenplatte und Trägerprofil besteht eine feste, ggf. vollflächige Verbindung, beispielsweise in Form einer Klebeverbindung oder einer mechanischen Verbindung, zum Beispiel mittels Klammern. Die Deckenplatte 17 kann alternativ dazu den Freiraum 21 zur vollständigen oder im Querschnitt teilweisen Aufnahme des Absorberstreifens 03 aufweisen.

Der Absorberstreifen 03 besteht aus einem bzw. bevorzugt mehreren Schallabsorberelementen aus einem nicht duktilen Schaumstoff, vorzugweise einem glasbasierten Schaumstoff mit einem Blähglasgranulatanteil. Dieses Material eignet sich gut zur Schalldämmung und lässt sich einfach verarbeiten. Die Schallabsorberelemente weisen einen längenspezifischen Strömungswiderstand im Bereich 8 - 10 kPa*s/m² auf, vorzugsweise 8 - 9 kPa*s/m².

Der Absorberstreifen besitzt eine Breite zwischen 200 mm und 400 mm sowie eine Dicke von 25 mm bis 65 mm. Der Absorberstreifen 03 ist vorzugsweise plattenförmig ausgeführt. Zum Bilden eines umlaufenden Absorberstreifens03 werden mehrere Schallabsorberelemente fortlaufend ohne Zwischenraum aneinandergereiht. Bei alternativen Ausführungsformen können sich die Absorberstreifen 03 auch nur abschnittsweise an den oberen Stoßkanten des Raumes 01 erstrecken.

Fig. 4 zeigt den an der oberen Kante 02 des Raumes 01 angeordneten Absorberstreifen 03, entsprechend der in Fig. 1 dargestellten Ausführung. Die in diesem Kantenbereich auftretenden Reflexionen von diffusen Schallwellen sind mittels Pfeilen stark vereinfacht dargestellt. Die einfallenden Schallwellen werden vor allem im Bereich der oberen Kante des Raumes an Wand und Decke reflektiert, wodurch eine besonders gute Absorptionswirkung mittels Absorberstreifen03 erreicht werden kann.

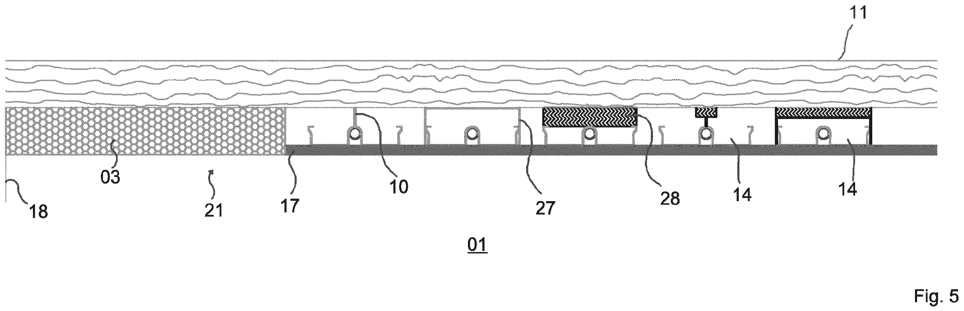

Fig. 5 zeigt eine abgewandelte Ausführungsform der Deckenkonstruktion, die sich vor allem dadurch auszeichnet, dass auf die Trägerprofile verzichtet wurde. Im Übrigen gleicht diese Ausführung der in Fig. 2 gezeigten, denn der Absorberstreifen 03 ist in einem Freiraum 21 zwischen der Bauwerkswand 18 und der Deckenplatte 17 angeordnet. Bei Verzicht auf die Trägerprofile können die Wärmeleitprofile 14 auf unterschiedlichste Weise an der Bauwerksdecke 11 angebracht sein, wobei in Fig. 5 einige Beispiele gezeigt sind. So lassen sich die Wärmeleitprofile 14 direkt mit Abhängern 10 an der Bauwerksdecke 11 befestigen oder durch Einsetzen in U-Profile 27, oder durch sonstige Befestigung an der Bauwerksdecke 11, vorzugsweise unter Zwischenlage eines Dämmstreifens 28, um unverwünschten Wärmeübergang in die Bauwerksdecke zu verhindern.

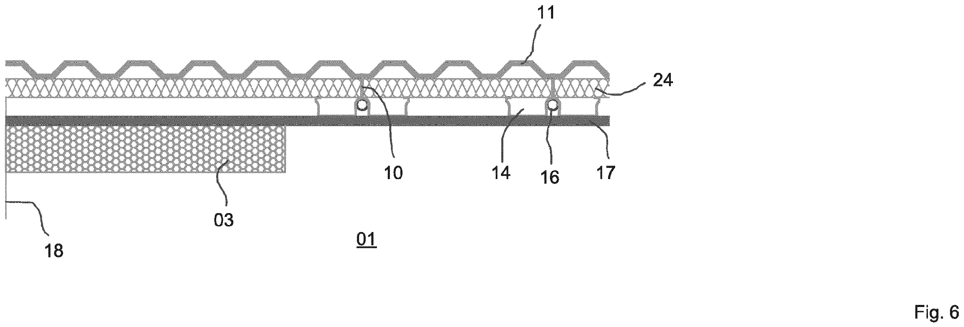

Fig. 6 zeigt eine weitere Ausführungsform der Deckenkonstruktion, die sich ebenfalls dadurch auszeichnet, dass auf die Trägerprofile verzichtet wurde. Im Übrigen gleicht diese Ausführung der in Fig. 1 gezeigten, denn der Absorberstreifen 03 ist an der Unterseite der Deckenplatte 17 angebracht. Die Wärmeleitprofile 14 sind direkt mit Abhängern 10 an der Bauwerksdecke 11 befestigt. Zu Isolationszwecken ist eine durchgängige Wärmedämmung 24 im Bereich zwischen den abgehängten Wärmeleitprofilen 14 und der Unterseite der Bauwerksdecke 11 angeordnet.

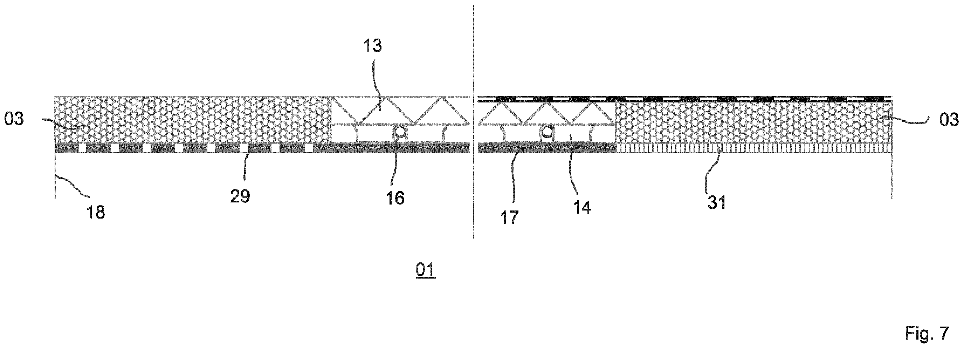

Fig. 7 zeigt ebenfalls in Schnittdarstellung weitere Gestaltungsmöglichkeiten der multifunktionalen Deckenkonstruktion. Die Bauwerksdecke ist hier nicht dargestellt. Gezeigt sind eines der Tragprofile 13 sowie zwei daran angebracht Wärmeleitprofile 14, wobei es nicht darauf ankommt, wie die Wärmeleitprofile an der Bauwerksdecke angebracht sind. Abweichend zu den zuvor beschriebenen Ausführungsformen ist die Gestaltung der Unterfläche der Deckenkonstruktion. Während der Hauptteil der Fläche des Raums 01 durch die Deckenplatte 17 überspannt wird, befinden sich unterhalb der Absorberstreifen, also an den Rändern des Raumes, entweder eine Lochplatte 29 oder eine Akustikplatte 31, deren Unterseite in einer Ebene mit der Unterseite der Deckenplatte 17 liegt. Es entsteht somit ein ebener Flächeneindruck an der Raumdecke. In den Randbereichen sind aber hinreichende akustische Öffnungen, z. B. als Löcher oder Poren vorgesehen, um den nahezu ungehinderten Zugang der im Raum auftretenden Schallwellen zu den Absorberstreifen 03 zu gestatten.

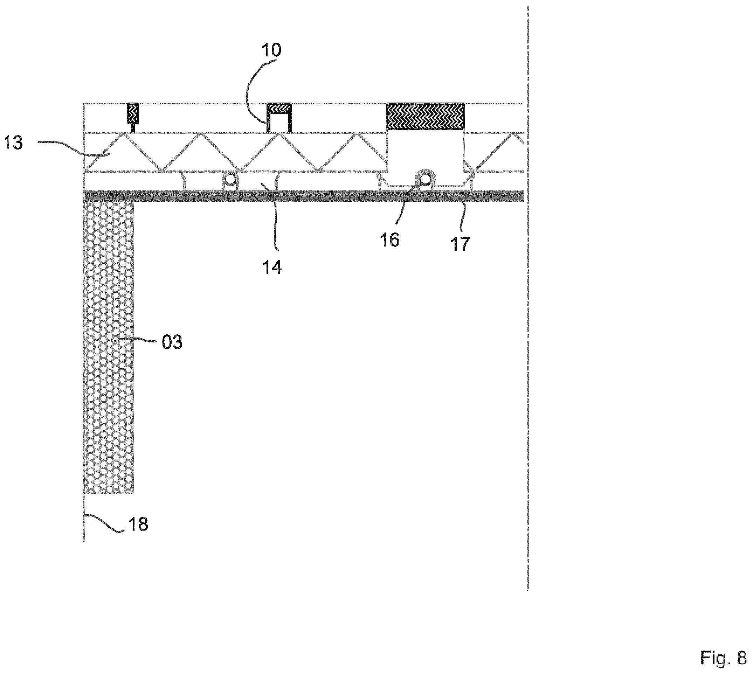

Fig. 8 zeigt eine nochmals abgewandelte Ausführungsform der Deckenkonstruktion, die sich dadurch auszeichnet, dass der Absorberstreifen 03 auf die Bauwerkswand 18 aufgesetzt ist. Im Übrigen gleicht diese Ausführung der in Fig. 1 gezeigten. Hier allerdings grenzt der Absorberstreifen 03 an die Unterseite der Deckenplatte 17 an und verläuft vertikal an der Bauwerkswand. Die Deckenplatte 17 erstreckt sich oberhalb des Absorberstreifens 03 bis zur Bauwerkswand, ggf. unter Belassung einer Dehnungsfuge. Die Dehnungsfuge ist durch den Absorberstreifen 03 verdeckt, was bezüglich Brandschutzanforderungen zu einer erhöhten Feuerabwehrzeit führt. Die Wärmeleitprofile 14 sind am Trägerprofil 13 angebracht, welches mit Abhängern 10 an der Bauwerksdecke 11 befestigt ist.

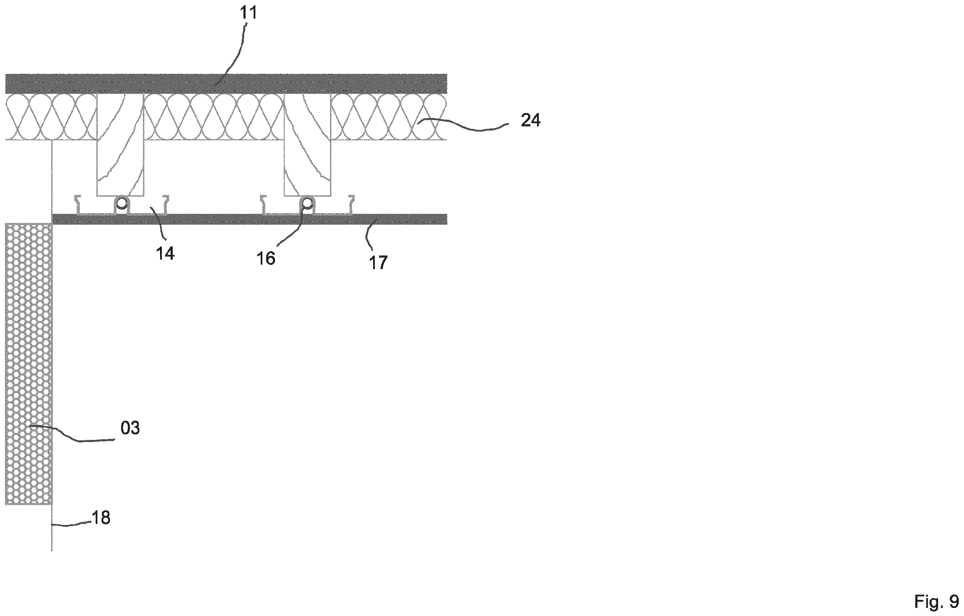

Fig. 9 zeigt eine weitere Ausführungsform der Deckenkonstruktion, die sich ebenfalls dadurch auszeichnet, dass dass der Absorberstreifen 03 an der Bauwerkswand 18 angeordnet ist, jedoch nicht aufgesetzt sondern in diese integriert, sodass sich eine durchgehende Wandoberfläche ohne Erhöhung ergibt. Im Übrigen gleicht diese Ausführung der in Fig. 5 gezeigten. Hier allerdings grenzt der Absorberstreifen 03 an die Unterseite der Deckenplatte 17 an und verläuft vertikal an der Bauwerkswand. Die Deckenplatte 17 erstreckt sich bis zur Bauwerkswand, ggf. unter Belassung einer Dehnungsfuge. Die Wärmeleitprofile 14 sind direkt an der Bauwerksdecke 11 befestigt. Zu Isolationszwecken ist eine durchgängige Wärmedämmung 24 im Bereich zwischen den Wärmeleitprofilen 14 und der Unterseite der Bauwerksdecke 11 angeordnet.

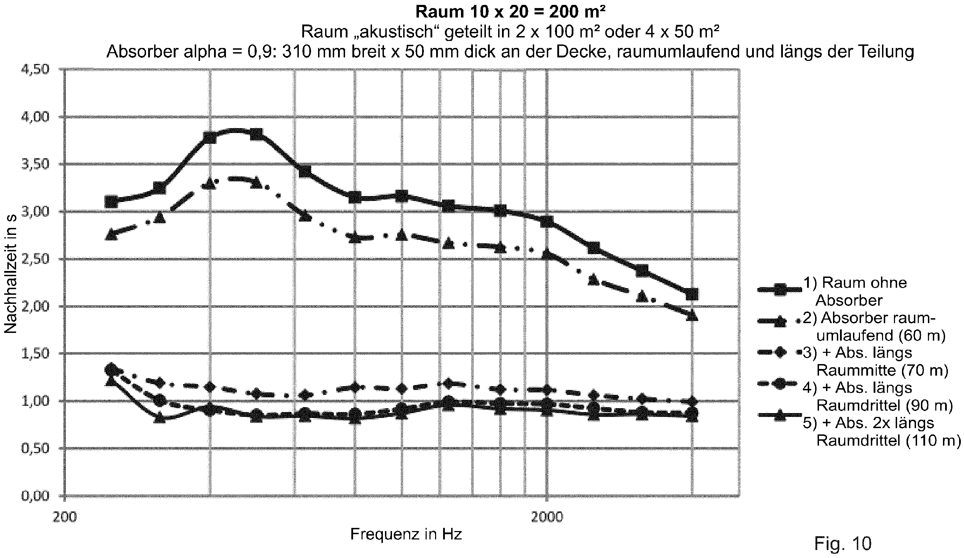

Fig. 10 zeigt in einem Diagramm mehrere Messwertkurven zur Nachhallzeit über einen breiten Frequenzbereich. Die einzelnen Kurven wurden in demselben Raum mit einer Grundfläche von 10 x 20 m aufgenommen, wobei die Wände und die Decke aus bauüblichem Stahlbeton hergestellt waren.

Kurve 1) zeigt den Verlauf der Nachhallzeit im ursprünglichen Raum, d.h. ohne Einbau der Schallabsorberanordnung.

Kurve 2) zeigt die Nachhallzeit nach Einbau der Absorberstreifen, umlaufend im Raum an der Decke angebracht, jeweils verlaufend bis in die obere Stoßkante. Die Nachhallzeit verringert sich gleichmäßig über alle Frequenzen um etwa 0,3 - 0,4 s. Dieses Ergebnis ist noch nicht zufriedenstellend und darauf zurückzuführen, dass der Raum eine Grundfläche von deutlich mehr als 120 m² aufweist.

Die Kurven 3), 4) und 5) zeigen die Nachhallzeiten im Raum, wenn dieser in akustische Zellen mit ≤ 120 m² unterteilt wurde. Diese Unterteilung erfolgte jeweils durch das Anbringen derselben Schallabsorberelemente an der Decke im Innenbereich des Raums entlang gerade Linien, sodass sich ein Raster mit Flächen von 1 x 200, 2 x 100 und 4 x 50 m² ergab. Erkennbar sind die Nachhallzeiten drastisch verringert, um mehr als 1 s über den gesamten Frequenzbereich. Die überraschende Wirkung tritt bei akustischen Raumgrößen ab kleiner 100 m² auf. Die akustische Absorptionsleistung ist auch durch Mehrinstallation gegenüber der beschriebenen Schallabsorberanordnung nur noch unterproportional zu verbessern. Die Absorberkonstruktion zeigt somit ein Optimum im Verhältnis von installierter Absorbermenge und erreichter Absorptionsleistung.

### Bezugszeichenliste

- 01 -: Raum
- 02 -: obere Kante / Stoßkante
- 03 -: Absorberstreifen
- 10 -: Abhänger
- 11 -: Bauwerksdecke
- 12 -: Schwingungsdämpfungsabschnitt
- 13 -: Tragprofile
- 14 -: Wärmeleitprofile
- 15 -: Leitungsaufnahmebereich
- 16 -: Wärmemediumleitung
- 17 -: Deckenplatte
- 18 -: Bauwerkswand
- 19 -: --
- 20 -: --
- 21 -: Freiraum
- 22 -: Zwischenabhänger
- 23 -: Deckenbalken
- 24 -: Wärmedämmung
- 25 -: --
- 26 -: obere Wärmeleitprofile
- 27 -: U-Profile
- 28 -: Dämmstreifen
- 29 -: Lochplatte
- 30 -: --
- 31 -: Akustikplatte

## Patentansprüche

1. Multifunktionale Deckenkonstruktion, insbesondere für Wohn- und Arbeitsräume (01), umfassend:
- mehrere Wärmeleitprofile (14), die mittelbar oder unmittelbar an einer Bauwerksdecke (11) befestigt sind und eine nach unten gerichtete Montagefläche besitzen, wobei in der Montagefläche ein Leitungsaufnahmebereich (15) ausgeformt ist;
- eine Wärmemediumleitung (16), die im Leitungsaufnahmebereich (15) der Wärmeleitprofile (14) verläuft und ein Wärme transportierendes Medium führt;
- eine Deckenplatte (17), die an der Montagefläche der Wärmeleitprofile (14) befestigt ist und in Wärme leitendem Kontakt mit der Wärmemediumleitung (16) steht;
**gekennzeichnet durch**:
- einen aus Schallabsorberelementen zusammengesetzten Absorberstreifen (03), der sich längs einer zwischen einer Bauwerkswand (18) und der Ebene der Deckenplatte (17) verlaufenden oberen Stoßkante (02) zumindest abschnittsweise erstreckt, wobei die Schallabsorberelemente eine Breite von 200 - 400 mm, eine Dicke von 25 - 65 mm sowie einen längenspezifischen Strömungswiderstand im Bereich 8 - 10 kPa*s/m² aufweisen, und wobei die Schallabsorberelemente aus Blähglasgranulat bestehen mit einer Korngröße von 0,25 - 4 mm, wobei das Granulat in Plattenform gesintert ist oder mit hinzugesetztem Bindemittel verbunden ist.

2. Multifunktionale Deckenkonstruktion nach Anspruch 1,
**dadurch gekennzeichnet, dass** die Deckenplatte (17) aus einem nicht brennbaren Material besteht, insbesondere als Brandschutzplatte ausgebildet ist.

3. Multifunktionale Deckenkonstruktion nach Anspruch 1 oder 2, **dadurch gekennzeichnet, dass** sich die Deckenplatte (17) im Wesentlichen bis zur Bauwerkswand (18) erstreckt, und dass der Absorberstreifen (03) an der in den Raum (01) gerichteten Unterseite der Deckenplatte (17) angebracht ist.

4. Multifunktionale Deckenkonstruktion nach Anspruch 1 oder 2, **dadurch gekennzeichnet, dass** sich zwischen der Deckenplatte (17) und der Bauwerkswand (18) ein streifenförmiger Freiraum (21) erstreckt, in welchem der Absorberstreifen (03) verläuft, wobei die in den Raum (01) gerichtete Unterseite der Deckenplatte (17) und die in den Raum (01) gerichtete Unterseite des Absorberstreifens (03) bevorzugt in einer Ebene liegen.

5. Multifunktionale Deckenkonstruktion nach einem der Ansprüche 1 bis 4, **dadurch gekennzeichnet, dass** die Wärmeleitprofile (14) an Tragprofilen (13) angebracht sind, die vorzugsweise über Abhänger (10) an der Bauwerksdecke (11) angebracht sind, wobei die Abhänger (10) besonders bevorzugt einen Schwingungsdämpfungsabschnitt (12) aufweisen.

6. Multifunktionale Deckenkonstruktion nach einem der Ansprüche 1 bis 5, **dadurch gekennzeichnet, dass** zwischen der Deckenplatte (17) und der Montagefläche der Wärmeleitprofile (14) zumindest abschnittsweise eine metallische Wärmeleitplatte oder -folie angeordnet ist.

7. Multifunktionale Deckenkonstruktion nach einem der Ansprüche 1 bis 6, **dadurch gekennzeichnet, dass** zwischen dem Rand der Deckenplatte (17) und/oder dem Rand des Absorberstreifens (03) eine elastische Brandschutzdichtung verläuft.

8. Multifunktionale Deckenkonstruktion nach einem der Ansprüche 1 bis 7, **dadurch gekennzeichnet, dass** die Deckenplatte (17) einen erhöhten Feuerwiderstandswert aufweist.

9. Multifunktionale Deckenkonstruktion nach einem der Ansprüche 1 bis 8, **dadurch gekennzeichnet, dass** die Deckenplatte (17) zweilagig ausgeführt ist, wobei die nach oben gerichtete Lage sich im Wesentlichen bis zur Bauwerkswand (18) erstreckt und die nach unten gerichtete Lage den streifenförmigen Freiraum (21) belässt, in welchem der Absorberstreifen (03) verläuft.

10. Multifunktionale Deckenkonstruktion nach einem der Ansprüche 1 bis 9, **dadurch gekennzeichnet, dass** der Absorberstreifen (03) lösbar angebracht ist.

## Claims

1. A multifunctional ceiling structure, in particular for living spaces and workspaces (01), including:
- multiple heat-conducting profiles (14) that are directly or indirectly fastened to a building ceiling (11), and having a downwardly directed mounting surface, wherein a line receiving region (15) is formed in the mounting surface;
- a heating medium line (16) that runs in the line receiving region (15) of the heat-conducting profiles (14) and conducts a heat-transporting medium;
- a ceiling panel (17) that is fastened to the mounting surface of the heat-conducting profiles (14) and is in heat-conducting contact with the heating medium line (16) ;
**characterized by**:
- an absorber strip (03), made up of sound absorber elements, that extends, at least in sections, along an upper abutting edge (02) that runs between a building wall (18) and the plane of the ceiling panel (17), wherein the sound absorber elements have a width of 200-400 mm, a thickness of 25-65 mm, and a length-specific flow resistance in the range of 8-10 kPa*s/m², and wherein the sound absorber elements consist of expanded glass granules with a grain size of 0.25 - 4 mm, the granules being sintered in sheet form or bonded with added binder.

2. The multifunctional ceiling structure according to Claim 1, **characterized in that** the ceiling panel (17) is made of a noncombustible material, and in particular is designed as a fire protection panel.

3. The multifunctional ceiling structure according to Claim 1 or 2, **characterized in that** the ceiling panel (17) extends essentially to the building wall (18), and the absorber strip (03) is mounted on the bottom side of the ceiling panel (17) that is directed into the room (01).

4. The multifunctional ceiling structure according to Claim 1 or 2, **characterized in that** a strip-shaped free space (21) in which the absorber strip runs (03) extends between the ceiling panel (17) and the building wall (18), wherein the bottom side of the ceiling panel (17) directed into the room (01) and the bottom side of the absorber strip (03) directed into the room (01) are preferably situated in one plane.

5. The multifunctional ceiling structure according to one of Claims 1 to 4, **characterized in that** the heat-conducting profiles (14) are mounted on support profiles (13) that are preferably mounted on the building ceiling (11) via hangers (10), wherein the hangers (10) particularly preferably have a vibration damping section (12).

6. The multifunctional ceiling structure according to one of Claims 1 to 5, **characterized in that** a metallic heat-conducting plate or foil is situated, at least in sections, between the ceiling panel (17) and the mounting surface of the heat-conducting profiles (14).

7. The multifunctional ceiling structure according to one of Claims 1 to 6, **characterized in that** an elastic fire protection seal runs between the edge of the ceiling panel (17) and/or the edge of the absorber strip (03).

8. The multifunctional ceiling structure according to one of Claims 1 to 7, **characterized in that** the ceiling panel (17) has an increased fire resistance value.

9. The multifunctional ceiling structure according to one of Claims 1 to 8, **characterized in that** the ceiling panel (17) has a two-layer design, wherein the upwardly directed layer extends essentially to the building wall (18), and the downwardly directed layers leaves open the strip-shaped free space (21) in which the absorber strip (03) runs.

10. The multifunctional ceiling structure according to one of Claims 1 to 9, **characterized in that** the absorber strip (03) is detachably mounted.

## Revendications

1. Structure de plafond multifonctionnelle, destinée notamment à des pièces de vie et de travail (01), comprenant :
- plusieurs profilés conducteurs thermiques (14), lesquels sont fixés indirectement ou directement sur un plafond de bâtiment (11) et sont dotés d'une surface de montage dirigée vers le bas, dans la surface de montage étant façonnée une zone de logement de conduits (15) ;
- un conduit de fluide caloporteur (16), qui s'écoule dans la zone de logement de conduits (15) des profilés conducteurs thermiques (14) et qui véhicule un fluide caloporteur ;
- un panneau de plafond (17), qui est fixé sur la surface de montage des profilés conducteurs thermiques (14) et qui est en contact conducteur de chaleur avec le conduit de fluide caloporteur (16) ;
**caractérisée par** :
- une bande d'absorption (03) composée d'éléments absorbeurs de son, qui s'étend au moins par endroits le long d'une arête d'aboutage (02) s'écoulant entre une paroi du bâtiment (18) et la plan du panneau de plafond (17), les éléments absorbeurs de son présentant une largeur de 200 à 400 mm, une épaisseur de 25 à 65 mm, ainsi qu'une résistance spécifique à l'écoulement longitudinal de l'ordre de 8 à 10 kPa*s/m², et les éléments absorbeurs de son étant constitués de granulés de verre soufflé d'une granulométrie de 0,25 à 4 mm, les granulés étant frittés en forme de panneau ou étant reliés avec un agent liant rajouté.

2. Structure de plafond multifonctionnelle selon la revendication 1, **caractérisée en ce que** le panneau de plafond (17) est constitué d'une matière non inflammable, est conçu notamment sous la forme d'un panneau coupe-feu.

3. Structure de plafond multifonctionnelle selon la revendication 1 ou 2, **caractérisée en ce que** le panneau de plafond (17) s'étend sensiblement jusqu'à la paroi du bâtiment (18) et **en ce que** la bande d'absorption (03) est montée sur la face inférieure dirigée vers la pièce (01) du panneau de plafond (17).

4. Structure de plafond multifonctionnelle selon la revendication 1 ou 2, **caractérisée en ce qu'**entre le panneau de plafond (17) et la paroi du bâtiment (18) s'étend un espace libre (21) en forme de bande, dans lequel s'écoule la bande d'absorption (03), la face inférieure dirigée vers la pièce (01) du panneau de plafond (17) et la face inférieure dirigée vers la pièce (01) de la bande d'absorption (03) se situant de préférence dans un plan.

5. Structure de plafond multifonctionnelle selon l'une quelconque des revendications 1 à 4, **caractérisée en ce que** les profilés conducteurs thermiques (14) sont montés sur des profilés porteurs (13), qui sont montés de préférence par l'intermédiaire de suspensions (10) sur le plafond de bâtiment (11), les suspensions (10) comportant de manière particulièrement préférentielle une partie amortisseuse de vibrations (12).

6. Structure de plafond multifonctionnelle selon l'une quelconque des revendications 1 à 5, **caractérisée en ce qu'**entre le panneau de plafond (17) et la surface de montage des profilés conducteurs thermiques (14) est placé au moins par endroits un panneau ou film métallique conducteur thermique.

7. Structure de plafond multifonctionnelle selon l'une quelconque des revendications 1 à 6, **caractérisée en ce qu'**entre le bord du panneau de plafond (17) et/ou le bord de la bande d'absorption (03) s'écoule un joint coupe-feu élastique.

8. Structure de plafond multifonctionnelle selon l'une quelconque des revendications 1 à 7, **caractérisée en ce que** le panneau de plafond (17) fait preuve d'une valeur élevée de résistance au feu.

9. Structure de plafond multifonctionnelle selon l'une quelconque des revendications 1 à 8, **caractérisée en ce que** le panneau de plafond (17) est réalisé en deux couches, la couche dirigée vers le haut s'étendant sensiblement jusqu'à la paroi du bâtiment (18) et la couche dirigée vers le bas laissant dégagé l'espace libre (21) en forme de bande dans lequel s'écoule la bande d'absorption (03).

10. Structure de plafond multifonctionnelle selon l'une quelconque des revendications 1 à 9, **caractérisée en ce que** la bande d'absorption (03) est montée de manière amovible.
